# EUROPEAN PATENT APPLICATION

(11) **EP 3 805 846 A1**
(43) Date of publication of application: **14.04.2021**
(21) Application number: 18922856.2
(22) Date of filing: 11.06.2018
(51) Int. Cl.: G02B 27/02, H04N 5/64

(54) **IMAGE DISPLAY DEVICE**

(71) Applicant: SHIMADZU CORPORATION, Kyoto-shi, Kyoto 604-8511 (JP)
(72) Inventor: TATENO, Ryo, Kyoto-shi, Kyoto 604-8511 (JP); TANAKA, Masato, Kyoto-shi, Kyoto 604-8511 (JP)
(74) Representative: Müller-Boré & Partner Patentanwälte PartG mbB
(86) International application number: PCT/JP2018/022270
(87) International publication number: WO 2019/239466

(57) **Abstract**

Image light emitted from an image emitting unit including a light source (1) or the like is introduced into a light guide (10), reflected by an incident-side reflection surface (12), and guided to an inside of a substrate (11). The image light propagates while being reflected by a first surface (11a) and a second surface (11b) of the substrate (11), and is emitted from the substrate (11) by being partially reflected by the outgoing-side reflection surfaces (13a to 13e) as half mirrors. A transparent plastic protective plate (15) is disposed with a distance "d" of 1 mm < d ≦ 20 mm from the second surface (11b) of the substrate (11). The protective plate (15) prevents oils and fats, such as, e.g., fingerprints, or water droplets from adhering to the surfaces of the substrate (11) and prevents fragments from scattering toward the user when the light guide (10) is damaged. Further, since the distance d between the substrate (11) and the protective plate (15) is appropriately determined, even if the user presses the protective plate (15) strongly when, e.g., wearing or detaching the device, the deflected protective plate (15) will not come into contact with the light guide (10), thereby avoiding damage to the light guide (10).

## Description

### Technical Field

The present invention relates to an image display device for displaying image information in front of user's eyes as a virtual image. The image display device according to the present invention is suitable for an image display device, such as, e.g., a helmet mounted display, a head-up display, and a glasses-type display (so-called "smart glass").

### Background Art

In automobiles and trains, a head-up display is used in which an image displayed on a display element, such as, e.g., a liquid crystal display (LCD), is projected onto a windshield or a combiner to reflect it back to a driver to form a display image by a virtual image in front of the eyes of the driver. Further, in airplanes, a helmet mounted display is used in which an image is projected onto a combiner provided on a helmet worn by a pilot on the head to form a display image by a virtual image in front of the eyes of the pilot by a similar mechanism. Recently, a spectacle type head mounted display called a smart glass or a head mount type head-mounted display or the like has also begun to become widespread.

Various types of image display devices are known as optical systems that display a virtual image in front of user's eyes. As one of such systems, a system using a light guide (light guide plate) is known.

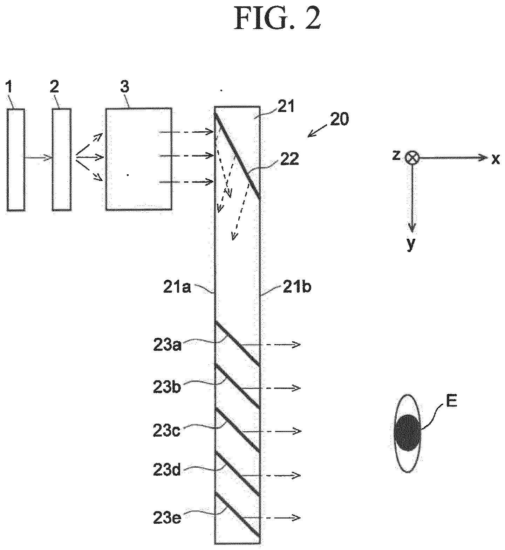

FIG. 2 is a schematic diagram showing an optical path configuration according to an example of a conventional image display device using a light guide disclosed in, e.g., Patent Documents 1 and 2. For the convenience of description, the x-axis, y-axis, and z-axis orthogonal to each other are defined as shown in the drawings.

The image display device is provided with a light source 1, a display element 2, a collimating optical system 3, and a light guide 20. Here, the display element 2 is a transmissive liquid crystal display element, and the light source 1 is a backlight light source for a so-called transmissive liquid crystal display element. The light emitted from the light source 1 illuminates the display element 2 from the rear side, so that the light (hereinafter referred to as "image light") including an image to be formed on the display surface of the display element 2 as information is emitted from the display element 2. The collimating optical system 3 introduces the image light emitted from the respective points (pixels) of the display surface of the display element 2 as substantially parallel light fluxes to the light guide 20. Accordingly, the light introduced from the collimating optical system 3 to the light guide 20 is a set of parallel light fluxes that include information on different portions of the image formed on the display surface of the display element 2 and are incident on the light guide 20 at different angles.

The light guide 20 is provided with a polarized cubic shaped transparent substrate 21. The substrate 21 has a first surface 21a and a second surface 21b opposed to each other in parallel to the y-z plane so as to be spaced apart in the x-axis direction and a third surface and a fourth surface (not shown) opposed to each other in parallel to the x-y plane so as to be spaced apart in the z-axis direction. In the substrate 21, one incident-side reflection surface 22 and a plurality of (5 in this example) outgoing-side reflection surfaces 23a to 23e are formed. The incident-side reflection surface 22 is perpendicular to the third surface and the fourth surface of the substrate 21 and is inclined with respect to the first surface 21a and the second surface 21b. The plurality of outgoing-side reflection surfaces 23a to 23e is perpendicular to the third surface and the fourth surface in the same manner as in the incident-side reflection surface 22 and is inclined with respect to the first surface 21a and the second surface 21b. The plurality of outgoing-side reflection surfaces 23a to 23e is parallel to each other. Here, the incident-side reflection surface 22 is a reflection surface configured by, e.g., a mirror, and the outgoing-side reflection surfaces 23a and 23e each are a partial reflection surface configured by, i.e., a beamsplitter or a half mirror that reflects a part of the illuminated light and transmits the remainder.

The image light including the information of different portions of the image formed on the display surface of the display element 2 is, as described above, incident on the substrate 21 of the light guide 20 at different angles as parallel light fluxes and is reflected by the incident-side reflection surface 22. The light fluxes of the image light propagate the inside of the substrate 21 while being repeatedly reflected by the first surface 21a and the second surface 21b of the substrate 21, and reach the outgoing-side reflection surface 23a positioned closest to the incident-side reflection surface 22. Depending on its transmittance, the outgoing-side reflection surface 23a reflects a part of the arrived image light and transmits the reminder thereof. The transmitted image light reaches the subsequent outgoing-side reflection surface 23b. The part of which is reflected by the outgoing-side reflection surface and the reminder of which is transmitted therethrough. The remaining outgoing-side reflection surfaces 23c to 23e also reflect a part of the light. Therefore, a part of the image light propagated the inside of the substrate 21 of the guide 20 is reflected by the plurality of outgoing-side reflection surfaces 23a to 23e, respectively, transmitted through the second surface 21b of the substrate 21, and emitted to the outside. The image light reflected at each outgoing-side reflection surface 23a to 23e is incident on the user's eyes E at a predetermined angle.

In this way, in the above-described image display device, an image formed on the display surface of the display element 2 is displayed in front of the user's eyes as a virtual image. Since the substrate 21 of the light guide 20 is transparent and the outgoing-side reflection surfaces 23a to 23e are partial reflection surfaces, the user can visually recognize the forward scene through the substrate 21 of the light guide 20. That is, this image display device is a see-through type image display device and can display any virtual image in a manner as to be superimposed on the scene.

As described above, in the above-described image display device, the image light propagates while being substantially totally reflected by the first surface 21a and the second surface 21b of the substrate 21 of the light guide 20. However, when oils and grease, such as fingerprints, or water droplets or the like adhere to the first surface 21a and/or the second surface 21b of the substrate 21, the image light is not totally reflected at the portion and partially leaks to the outside without being reflected. Therefore, there is a possibility that the quantity of light of the image light is reduced, so that the image to be displayed becomes dark, a part of the image is missed, or stray light is generated due to diffuse reflection, resulting in deterioration of the image quality. In order to solve these problems, in the conventional image display device described in Patent Document 3, a protective plate made of a material transparent or translucent to visible light is disposed so as to face the surface (second surface 21b in FIG. 2) of the substrate of the light guide facing the user.

In the above-described conventional image display device, since the protective plate is disposed in front of the substrate of the light guide as seen from the user, it is possible to prevent adhesion of fats and oils, such as fingerprints, due to the contact of fingers with the surface of the substrate, or adhesion of raindrops, etc., when used outdoors, and also possible to prevent deterioration of the image quality due to such adhesion. However, such an image display device has the following problems.

According to the description of Patent Document 3, the distance between the substrate surface of the light guide and the protective plate is set within the range of 700 nm or more and 1 mm or less in consideration of avoiding the seepage of light from the substrate and avoiding the enlargement of the device. Generally, the protective plate is formed of synthetic resin, but the protective plate is not negligible in deflection due to temperatures and/or external stresses. In the image display device, such as a helmet mounted display or a glasses-type display, the chance that the user touches the protective plate is large when the user wears or removes the device. If the user presses the protective plate hard with his/her fingers, the force causes the reflection guide to be brought into contact with the light guide, which may result in damage or breakage of the light guide.

### Prior Art Document

### Patent Document

Patent Document 1: Japanese Patent No. 4508655
Patent Document 2: Japanese Patent No. 5,698,297
Patent Document 3: Japanese Unexamined Patent Application Publication No. 2015-172713

### SUMMARY OF THE INVENTION

### Problems to be Solved by the Invention

The present invention has been made to solve the above-described problems, and an object thereof is to provide an image display device capable of preventing damage and/or breakage of a light guide even if handling is inadvertent as described above.

### Means for Solving the Problem

The present invention made to solve the above-described problems relates to an image display device for displaying a virtual image in front of user's eyes. The image display device includes:
a) an image emitting unit including a display portion for forming two-dimensional image information, the image emitting unit being configured to generate parallel light fluxes different in an angle at each part on an image and cause the parallel light fluxes to be incident on a light guide described later, as an image light;
b) the light guide including a transparent substrate, an incident portion, and a plurality of partial reflection surfaces, wherein the transparent substrate includes a first surface and a second surface opposed in parallel to each other, the incident portion is configured to guide the image light to an inside of the substrate so that the image light is reflected by the first surface and the second surface, and the plurality of partial reflection surfaces is formed in the inside of the substrate and is configured to reflect a part of the image light guided to the inside of the substrate and propagated the inside of the substrate while being reflected by the first surface and the second surface and cause the part of the image light to emit to an outside of the substrate through the first surface or the second surface; and
c) a transparent or translucent flat plate member disposed in parallel to the first surface or the second surface of the substrate of the light guide through which the image light is emitted to the outside of the substrate so that the flat plate member is spaced apart from the first surface or the second surface by a distance within a range of greater than 1 mm and 20 mm or less.

In the image display device according to the present invention, in order to display an image capable of being visually recognized with the naked eyes of a user, normally, the wavelength region of the image light is a visible light region.

Further, considering the assembly, normally, the flat plate member is made of synthetic resin. Especially, it is preferable to use polycarbonate excellent in impact resistance and heat resistance as a material of the flat plate member.

The present inventors experimentally investigated the deflection characteristics of a 2 mm thick plate of polycarbonate used in protective glasses (goggles) generally used by airplane pilots. Consequently, assuming an image display device used as a helmet mounted display, it is found that in cases where the distance between the light guide and the flat plate member is 1 mm or less, when the force caused when the user wear or detaches the device is applied to the flat plate member, there is a possibility that the deflected flat plate member comes into contact with the light guide. In other words, by keeping the distance between the light guide and the flat plate member larger than 1 mm, even if a certain large force is applied to the flat plate member, the contact between the flat plate member and the light guide can be substantially avoided. Therefore, in the image display device according to the present invention, the distance between the light guide and the flat plate member is set to be greater than 1 mm.

On the other hand, the larger the distance between the light guide and the flat plate member, the more reliable the contact between the light guide and the flat plate member can be avoided. However, the size of the device becomes larger, making it impractical. In an aircraft pilot's helmet mounted display, the flat plate member prevents fragments from reaching the user's eyes when the light guide is broken due to, e.g., an accident. However, if the distance between the light guide and the flat plate member is too large, the fragments tend to fly around. For this reason, in the image display device of the present invention, the distance between the flat plate member and the light guide is set to be 20 mm or less, assuming the use as a helmet mounted display.

### Effects of the Invention

According to the image display device of the present invention, the distance between the surface of the substrate of the light guide through which the image light emits and the flat plate member is set to be within the rage of greater than 1 mm

and 20 mm or less. Therefore, even in cases where the user inadvertently presses the flat plate member with a finger, the flat plate member will not be brought into contact with the light guide, which makes it possible to avoid damage or breakage of the substrate. As a result, the reliability of the device according to the present invention is improved. For the user, unnecessary expense can be suppressed, which leads to cost reduction. Of course, the flat plate member is effective for preventing oil and fat, such as fingerprints, and water and the like from adhering to the substrate of the light guide and effective for protecting the eyes of the user when the substrate of the light guide is damaged or the like.

### BRIEF DESCRIPTION OF THE DRAWINGS

FIG. 1 is a schematic configuration diagram of an optical system in an image display device according to an embodiment of the present invention.
FIG. 2 is a schematic configuration diagram of an optical system according to an example of a conventional image display device.

### EMBODIMENTS FOR CARRYING OUT THE INVENTION

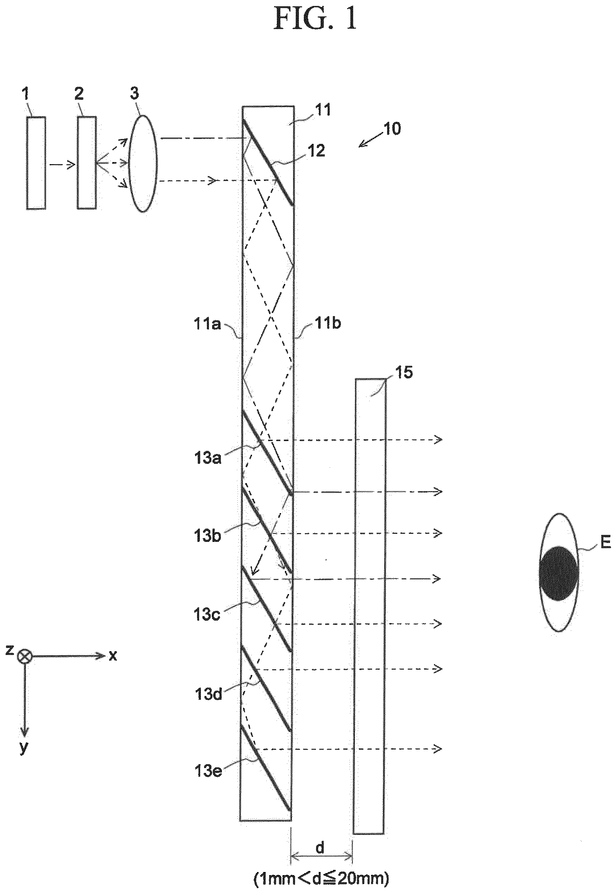

An image display device, which is an embodiment of the present invention, will be described with reference to the attached drawings. FIG. 1 is a schematic configuration diagram of an optical system of an image display device of this example.

The image display device of this example is provided with a light source 1, a display element 2, a collimating optical system 3, a light guide 10, and a protective plate 15. The light source 1, the display element 2, and the collimating optical system 3 correspond to the image emitting unit in the present invention, and may be the same as the light source 1, the display element 2, and the collimating optical system 3 in a conventional image display device, but not limited thereto. For example, as the display element 2, instead of a transmissive liquid crystal display element, a reflective liquid crystal display element or an organic EL display, or a DMD (digital macro mirror device), a MEMS mirror, a projector, or the like, may be used.

When a reflective liquid crystal display element or a DMD is used as the display element 2, as the light source 1, a light source that illuminates the liquid crystal display element or the DMD from the front side is used. Further, in cases where a self-emitting display element, such as, e.g., an organic EL display, is used as the display element 2, it can be considered that the light source 1 is incorporated in the display element 2. Further, in cases where a MEMS mirror for scanning an angle is used as the display element 2, a laser light source for emitting a thin laser beam toward the MEMS mirror is used as the light source 1, the collimating optical system 3 is omitted, or it is sufficient to use the collimating optical system 3 to finely tune the parallel light. Also, in the case of using a projector for imaging, the light source 1 can be considered as a projector and the display element 2 can be considered as a projector screen.

The light guide 10 is provided with a polarized cubic shaped substrate 11 having a first surface 11a and a second surface 11b opposed to each other in parallel to the y-z plane so as to be spaced away in the x-axis direction, and a third surface and a fourth surface (not shown) opposed to each other in parallel to the x-y plane so as to be spaced away in the z-axis direction. The substrate 11 is typically a transparent member made of, e.g., silica glass or glass. In the substrate 11, one incident-side reflection surface 12 and a plurality of (5 in this embodiment) outgoing-side reflection surfaces 13a to 13e are formed.

The incident-side reflection surface 12 is perpendicular to the third surface and the fourth surface and is inclined at a predetermined angle with respect to the first surface 11a and the second surface 11b. Further, a plurality of outgoing-side reflection surfaces 13a to 13e is, in the same manner as in the incident-side reflection surface 12, perpendicular to the third surface and the fourth surface and is inclined at a predetermined angle with respect to the first surface 11a and the second surface 11b. The incident-side reflection surface 12 is a reflection surface configured by a mirror or the like, and the outgoing-side reflection surfaces 13a to 13e each are a partial reflection surface having a predetermined reflectance property (transmittance property).

In this embodiment, the second surface 11b of the substrate 11 of the light guide 10 is an emission surface of the image light from the light guide 10. The protective plate 15 is disposed in parallel to the second surface 11b as an exist surface so as to be spaced apart from the second surface 11b by a predetermined distance "d". The protective plate 15 is transparent or translucent (preferably transparent) flat plate member, and is typically made of highly impact resistant synthetic resin, such as, e.g., polycarbonate.

In the image display device of this embodiment, image light is formed at the display element 2 by receiving the illumination light from the light source 1. The illumination light at this time is light in the wavelength band centered in the visible region (400 nm to 750 nm). The image light emitted from the display screen of the display element 2 is substantially collimated by a collimating optical system 3 and is introduced to the inside of the substrate 11 of the light guide 10 through the first surface 11a. The image light introduced from the collimating optical system 3 to the light guide 10 is a set of parallel light fluxes indecent to the light guide 10 at different angles each including information on different parts of the two-dimensional image formed on the display surface of the display element 2.

This image light is reflected by the incident-side reflection surface 12, then propagates the inside of the substrate 11 while being reflected one or more times by the first surface 11a and the second surface 11b, and reaches the outgoing-side reflection surface 13a positioned closest to the incident-side reflection surface 12. The outgoing-side reflection surface 13a reflects a part of the arrived light fluxes and transmits the remainder. The transmitted light reaches the subsequent outgoing-side reflection surface 13b. A part of the light fluxes is reflected and the reminder is transmitted. The other outgoing-side reflection surfaces 13c to 13e similarly reflect a part of the light fluxes and transmit the remainder. Therefore, the light fluxes propagated the inside of the substrate 11 of the light guide 10 are reflected little by little by a plurality of outgoing-side reflection surfaces 13a to 13e, and passes through the second surface 11b of the substrate 11 to be emitted to the outside. With this, the light fluxes introduced into the substrate 11 of the light guide 10 are expanded and emitted from the substrate 11. The image light emitted from the substrate 11 passes through the protective plate 15 and reaches the eyes E of the user. That is, in front of the user's eyes E, the image formed on the display surface of the display element 2 is displayed as an enlarged virtual image.

The distance "d" between the second surface 11b of the substrate 11 and the protective plate 15 is appropriately set within the range of 1 mm < d ≦ 20 mm. In the case of emphasizing compactness, the distance "d" may be a value closer to 1 mm, for example, 1.5 mm to 2 mm. In cases where the protective plate 15 is made of polycarbonate and has a thickness of about 2 mm, when the distance "d" is set to about 2 mm, the protective plate 15 will not come in contact with the substrate 11 of the light guide 10 even if the user presses the vicinity of the center of the protective plate 15 strongly to some extent. Thereby, it is possible to prevent the substrate 11 from being damaged or broken due to the contact of the protective plate 15.

When the second surface 11b of the substrate 11 is finely scratched, a part of the image light hit the part of the scratch of the second surface 11b at a large incident angle while propagating the inside of the substrate 11 leaks to the outside or diffuses without being totally reflected. That is, the fine scratches cause deterioration of the light utilization efficiency or contribute to the deterioration of the image quality, such as, e.g., generation of stay light. In contrast, in the image display device of this example, since the second surface 11b of the substrate 11 is hardly scratched. Therefore, the good light utilization efficiency can be maintained, and the generation of stray light can be prevented. Of course, if the protective plate 15 is violently brought into contact with the substrate 11, there is a possibility that the substrate 11 is damaged, but such damage can also be prevented.

Further, the protective plate 15 is disposed between the second surface 11b of the substrate 11 of the light guide 10 and the user, so that oils and fats, such as fingerprints of the user, water droplets, and the like are less likely to adhere to the second surface 11b. Although not shown in FIG. 1, a similar protective plate may be provided on the outer side of the first surface 11a of the substrate 11 of the light guide 10, or the light guide may be surrounded by connecting both the protective plates. In a see-through image display device, a protective plate provided on the outer side of the first surface 11 a of the substrate 11 of the light guide 10 must also be transparent.

Also, in cases where the compactness of the device is not emphasized very much, or in cases where the deflection is large due to, e.g., the thin plate thickness of the protective plate 15, the distance "d' between the second surface 11b of the substrate 11 and the protective plate 15 may be set to 20 mm or close to 20 mm.

The image display device of the above-described embodiment can be appropriately modified. For example, the number of the outgoing-side reflection surfaces may be arbitrarily determined as long as the number is plural.

Also as the incident portion for guiding the image light into the inside of the substrate 11 of the light guide 10 or the emitting potion for emitting the image light from the substrate 11, in place of the reflection surface and the partial reflection surfaces formed inside the substrate 11, a hologram surface, such as, e.g., a reflective volume hologram grating, may be used. Further, it may be configured such that a part of the first surface 11a of the substrate 11 of the light guide 10 is set to be non-parallel to the second surface 11b so that the non-parallel surface (the interface between the substrate 11 and the outer side) may be used as a reflection surface that reflects the image light.

In the image display device of the above-described embodiment, although the third surface and the fourth surface of the substrate 11 are parallel to each other, the third surface and the fourth surface need not be parallel to the x-y plane. Namely, the first surface 11a, the second surface 11b, the incident-side reflection surface 12, and the outgoing-side reflection surfaces 13a to 13e need not to be perpendicular to the third and fourth surfaces. The angles between them and the shapes of the third and fourth surfaces may be arbitrarily determined.

It should be noted that the above-described embodiments are mere examples of the present invention, and it is needless to say that they are encompassed within the scope of the claims of the present application even if it is appropriately changed, modified, or added within the scope of the present invention.

### Description of Symbols

- 1:: Light source
- 2:: Display element
- 3:: Collimating optical system
- 10:: Light guide
- 11:: Substrate
- 11a:: First surface
- 11b:: Second surface
- 12:: Incident-side reflection surface
- 13a to 13e:: Outgoing-side reflection surface
- 15:: Protective plate

## Claims

1. An image display device for displaying a virtual image in front of user's eyes, the image display device comprising:
a) an image emitting unit including a display portion for forming two-dimensional image information, the image emitting unit being configured to generate parallel light fluxes different in an angle at each part on an image and cause the parallel light fluxes to be incident on a light guide described later, as an image light;
b) the light guide including a transparent substrate, an incident portion, and a plurality of partial reflection surfaces, wherein the transparent substrate includes a first surface and a second surface opposed in parallel to each other, the incident portion is configured to guide the image light to an inside of the substrate so that the image light is reflected by the first surface and the second surface, and the plurality of partial reflection surfaces is formed in the inside of the substrate and is configured to reflect a part of the image light guided to the inside of the substrate and propagated the inside of the substrate while being reflected by the first surface and the second surface and cause the part of the image light to emit to an outside of the substrate through the first surface or the second surface; and
c) a transparent or translucent flat plate member disposed in parallel to the first surface or the second surface of the substrate of the light guide through which the image light is emitted to the outside of the substrate so that the flat plate member is spaced apart from the first surface or the second surface by a distance within a range of greater than 1 mm and 20 mm or less.

2. The image display device as recited in claim 1,
wherein a wavelength region of the image light is a visible light region.

3. The image display device as recited in claim 1, wherein the flat plate member is made of synthetic resin.

4. The image display device as recited in claim 3, wherein the flat plate member is made of polycarbonate.
